# EUROPEAN PATENT SPECIFICATION

(11) **EP 2 397 347 B1**
(45) Date of publication and mention of the grant of the patent: **29.05.2013**
(21) Application number: 11170390.6
(22) Date of filing: 17.06.2011
(51) Int. Cl.: B60C 19/00, B29D 30/00, B29D 30/06

(54) **Method for making pneumatic tire with foam noise damper and tire with foam noise damper**
Verfahren zur Herstellung eines Luftreifens mit Schaumgeräuschdämpfer und Luftreifen mit Schaumgeräuschdämpfer
Procédé de fabrication de pneu avec amortisseur de bruit en mousse et pneu avec amortisseur de bruit

(30) Priority: 21.06.2010 US 819581
(43) Date of publication of application: 21.12.2011
(73) Proprietor: The Goodyear Tire & Rubber Company, Akron, OH 44316-0001 (US)
(72) Inventor: Sandstrom, Paul Harry, Cuyahoga Falls, OH Ohio 44223 (US); Dong-Rong Pan, Eddy, Stow, OH Ohio 44224 (US); Zhang, Ping, Hudson, OH Ohio 44236 (US); Kimble, Bart Wakefield, Stow, OH Ohio 44224 (US); Majumdar, Ramendra Nath, Hudson, OH Ohio 44236 (US)
(74) Representative: Kutsch, Bernd

(56) References cited:
- EP-A1- 1 510 366
- EP-A1- 2 017 092
- EP-A1- 2 138 300
- EP-A2- 1 762 373
- GB-A- 2 087 902
- JP-A- 2010 111 089
- US-A1- 2004 103 967

## Description

### Field of the Invention

This invention relates to a method of protecting the innerliner of a tire from contamination during manufacture to enable subsequent adhesion of a foam noise damper to the innerliner surface and to a tire having a foam noise damper on the inner liner surface.

### Definitions

"Innerliner" means the layer or layers of elastomer or other material that form the inside surface of a tire and that contain the inflating fluid within the tire. The "innerliner" of a tube-type tire is often called a "squeegee" to distinguish it from the innerliner of a tubeless tire.

The terms "cure" and "vulcanize" are intended to be interchangeable terms unless otherwise noted.

The terms "green" and "uncured" are intended to be interchangeable unless otherwise noted.

"Virgin surface" means a surface, whether cured or not, that has not been subjected to a cleaning process and that has not come in contact with a release agent.

### Background of the Invention

Government regulations and consumer preferences continue to compel a reduction in the acceptable noise levels produced from the tires of passenger vehicles. One source of road noise is resonance within the air chamber enclosed by the innermost surface of the tire and the rim. One type of effort to reduce tire noise is damping the sound from the air vibration in the air chamber, which efforts have focused mainly on altering the innermost surface of the tire adjacent the tire carcass. In one approach, foam material is disposed as a noise damper in the inner cavity by attaching the foam to the innerliner of the tire, which is effective in reducing noise due to tire cavity resonance at 200 to 300 Hz. However, the attachment of such a foam noise damper to a tire innerliner is problematic.

Carcasses of pneumatic green tires are built as a series of layers of flexible high modulus cords encased in a low modulus rubber. An innerliner is positioned to form the innermost surface of the tire. The green tire is cured in a curing press using a curing bladder, which forces expansion of the tire. During curing, the innerliner expands with the carcass, which is forced against the indentations in the curing mold to form the tread of the tire, and all components are co-cured so as to provide a substantially cohesive bond between one and another.

The innerliner for a pneumatic tubeless tire is typically formed from a compound containing a high proportion by weight of a halobutyl rubber due to its good barrier properties. Before the tire is cured, the entire inner surface of the innerliner and/or the outer surface of the curing bladder are coated with a release agent. The release agent is commonly referred to as a "lining cement" when used on the surface of the innerliner, and as a "bladder lube" or "bladder spray" when used on the curing bladder. The release agent facilitates removal of the curing bladder from the innerliner after curing so that the innerliner is not damaged. The innerliner (or squeegee) for a pneumatic tube-type tire is typically a thin layer of ply coat stock to protect the tube from direct contact with nylon. These innerliners normally do not contain halobutyl rubber since barrier properties are not required.

Thus, prior to bonding a foam noise damper to the cured innerliner, in prior art methods the innerliner must be cleaned to remove contaminants present on the innerliner surface from the molding operation. In particular, the release agent must be removed from the innerliner surface. Solvents have typically been used for this cleaning operation. Solvents effective for removing the release agents contain hazardous air pollutants. These solvents are thus subject to environmental regulations, which have become more stringent in the recent past. It would thus be desirable to eliminate the need for solvent cleaning of the innerliner surface in order to comply with strict environmental regulations. In addition, solvent cleaning is labor intensive and costly due to its hazardous nature, such that significant cost savings may be realized by elimination of the solvent cleaning process. Alternatively, preparation of the innerliner for application of a foam noise damper may involve buffing the innerliner to provide a surface suitable for adhesion, see for example US-B- 7,669,628.

JP-A- 2001 111089 describes a method for making a tire having a foam noise damper wherein after curing a green innerliner protected by a barrier layer the method involves the removing of the barrier layer to reveal a virgin surface and to secure a noise damper to the virgin surface.

EP-A- 1 762 373 describes a similar method wherein after removing the barrier layer from the protected green innerliner, a virgin surface is revealed and a component is secured to the virgin surface.

EP-A- 2 017 092 describes a pneumatic tire comprising a noise damper in the form of a strip attached to the tire innerliner. The material of the strip is a spongy material of a synthetic resin such as polyurethane.

### Summary of the Invention

The present invention is directed to a method for making a tire having a foam noise damper in accordance with claim 1 and to a tire in accordance with claim 11.

Dependent claims refer to preferred embodiments of the invention.

### Brief Description of the Drawings

The accompanying drawings, which are incorporated in and constitute a part of this specification, illustrate embodiments of the invention and, together with a general description of the invention given above, and the detailed description given below, serve to explain the invention.
FIG. 1 is a sectional view showing an embodiment of the present invention.
FIG. 2 is a plan view, not to scale, of an assembly of a strip of a barrier layer long enough to overlie the entire circumferential surface of a rolled sheet of innerliner and to provide a pull-tab.
FIG. 3 is a perspective view schematically illustrating positioning of a prepared innerliner (as shown in FIG. 2) on a tire building drum.
FIG. 4 is a plan view, not to scale, of an assembly of a strip of a barrier layer covering only a portion of a sheet of innerliner.
FIG. 5 is a partial cross-section of a tire having a sheet of barrier layer in phantom view to show its removal after cure, and a foam noise damper adhered to the virgin innerliner surface.

### Detailed Description

In accordance with the present invention, the innerliner of a tire is protected from contamination, primarily that occurring from release agents used during the curing process, by adhering a protective barrier layer to the green virgin innerliner surface. In one embodiment, the protective barrier layer is a thermoformable film adapted to stretch with the tire materials during the shaping and curing process. In one embodiment, the protective barrier layer is a thin rubber sheet. In one embodiment, the barrier layer is coated with a pressure-sensitive adhesive (PSA) that is pressed to the green virgin innerliner surface to reliably and releasably adhere the thermoformable film. The optional PSA is particularly effective in preventing movement of the barrier layer during high-pressure spraying of lining cement to the innerliner. The invention may be further understood by reference to the Figures.

Like reference numerals are used throughout the several Figures to refer to like components, and like reference numerals are used to refer to components in both the cured and uncured (green) states.

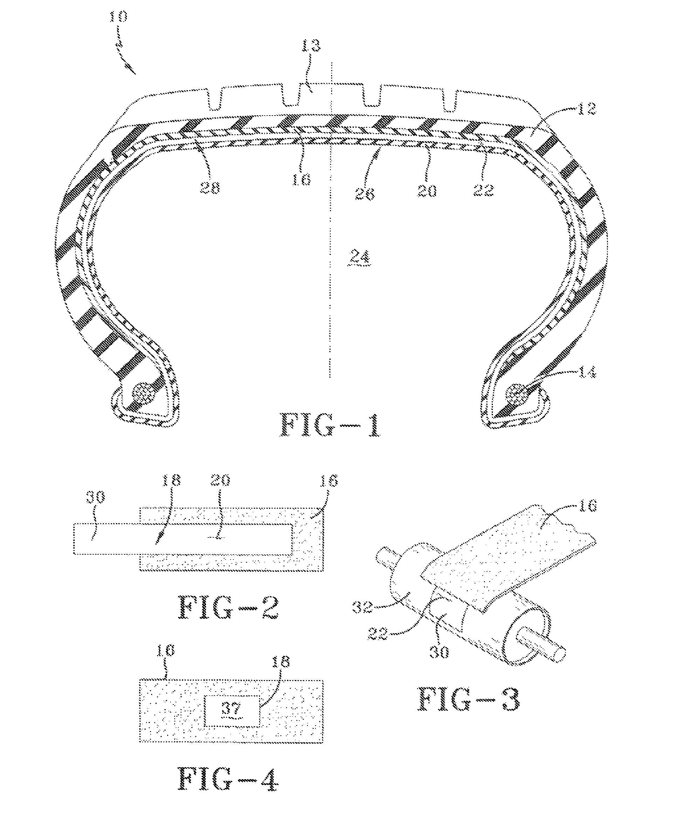

FIG. 1 depicts in cross-section a tire assembly 10 in accordance with the present invention. Tire assembly 10 includes a carcass 12 having a tread 13 disposed on the outermost surface, where tread 13 is the portion of the tire assembly 10 that contacts the ground during operation of the tire. As is known in the art, the carcass 12 may include one or more plies of cords and the carcass wraps the bead portions 14 of the tire 10. An innerliner 16 is disposed inside the carcass 12 so as to face the air chamber 24. In accordance with the present invention, the innerliner 16 is protected with barrier layer 20 adhered to the green virgin surface 28 of innerliner 16 at the innermost surface 26 facing the air chamber 24.

To form the tire assembly 10, the method of the present invention includes assembling the innerliner 16 in a green state, i.e., an uncured state, adjacent the green tire carcass 12, and adhering the barrier layer 20 to the green virgin surface 28 of green innerliner 16. A green tread strip 13 is assembled adjacent the outermost surface of the tire carcass 12. These layers may be assembled in any desired order. This green tire assembly 10 is then placed into a curing mold (not shown) such that the green tread strip 13 is positioned against the mold surface (not shown), and the barrier layer 20 is furthest from the mold surface so as to form the innermost layer.

In one embodiment, before all components are in place within the mold, a release agent (not shown) is applied to the green innerliner 16 over the barrier layer such that the barrier layer 20 acts as a protective barrier to prevent contact by the release agent to the virgin surface 28. The release agent, which is also referred to as lining cement, is generally applied by a high-pressure spray. Examples of lining cement-type release agent include organopolysiloxane- or silicone-based materials, such as polydimethylsiloxane with powdered mica or crystalline silica. Examples of commercially available lining cements are crystalline silica inside tire lube sold by Kalcor Coating Co. under Product Number 284-TCW, and LYNDCOAT^{®} DV silicone-containing release agent from Rhodia Silicones. In one embodiment, a pressure sensitive adhesive (not shown) is applied between barrier layer 20 and innerliner 16 such that the high-pressure lining cement spray does not displace the barrier layer 20.

In one embodiment, no release agent is used. In this embodiment, a non-stick type of tire cure bladder may be used for example.

After the green assembly 10 with protected innerliner 16 is placed in the mold, an expandable curing bladder (not shown) is then expanded against the protected innerliner 16 to press the green tire assembly 10 into the mold surface to press the green tread strip 13 into a tread pattern formed in the mold surface. A vulcanization temperature is applied in the mold while the tire assembly 10 is subjected to the pressure from the expanded curing bladder for a time sufficient to cure the tire assembly 10. After curing is completed, the curing bladder is deflated and stripped from the innerliner 16 protected by the barrier layer 20. Any loose lining cement may then be vacuumed from the inside of the tire assembly 10, and the barrier layer 20 is removed to reveal a cured virgin surface 28 free of release agent.

One embodiment of a method of the present invention may be described with further reference to FIGS. 2-3. As illustrated in FIG. 2, prior to the innerliner 16 being positioned on a building drum 32, a barrier layer 20, for example having a width less than the width of the innerliner, is positioned symmetrically about the longitudinal central axis of the green innerliner 16 and pressed to the green virgin surface 28 of the green innerliner 16 causing the barrier layer 20 to be reliably and removably adhered to the green innerliner 16. Preferably there is an overhand or "overlap" 30, sufficient to afford a pull-tab, to facilitate easy removal of the barrier layer 20 after cure. Alternatively, the barrier layer 20 may have a width equal to or greater than the width of the green innerliner 16 in the tire assembly 10, as depicted in FIG. 1, so that no portion of the surface 28 of the innerliner 16 is unprotected.

As shown in FIG. 3, from 2 cm to 20 cm of one end of the barrier layer 20 extends beyond one end of the green innerliner 16 as it is positioned on the drum 32, to form the overlap 30. To facilitate visual detection through the lining cement, the overlap 30 may be colored so as to contrast with the black of the innerliner 16 or white lining cement.

The green tire assembly 10 is removed from the drum 32 and can be stored with the barrier layer 20 protecting the green virgin surface 28 of the green innerliner 16. The innermost surface 26 is then sprayed with lining cement, which completely or partially covers the barrier layer 20, and the green assembly 10 is placed in a curing press to be conventionally cured. The cured tire assembly 10 is removed from the press, and the inside of the tire is vacuumed to remove lining cement, which is generally loosely attached to the barrier layer 20. The barrier layer 20 is then manually removed in one piece by pulling on the protruding end 30 of barrier layer 20. The cured virgin surface 28 beneath the barrier layer 20 is exposed, and is free of lining cement.

In another embodiment of the method of the present invention, a strip of barrier layer 20, for example, having a width substantially corresponding to the width of the tread 13, is inserted into the green assembly 10 after the assembly 10 is removed from the drum 32, and is positioned symmetrically about the circumferential center line of the green innerliner 16, pressing the barrier layer 20 against the green innerliner 16, so that it is adherently secured to the green innerliner 16, preferably leaving an overhang 30, as before. The innermost surface 26 of the green assembly 10 with the barrier layer 20 in position is then spray-coated with lining cement and the tire assembly 10 cured as before. When the barrier layer 20 is removed, a cured virgin surface 28 is exposed that is substantially indistinguishable from the cured virgin surface 28 produced by the prior method of building the tire 10 with the barrier layer 20 pre-positioned on the innerliner 16, but the prior method may be less cumbersome and less time-consuming.

Another embodiment of the present invention is illustrated in FIG. 4. In the event that only a portion of the innerliner 16 is to be protected, as for example, when a patch 37 of virgin surface is sufficient for the purpose of attaching a foam noise damper, a sheet of barrier layer 20 is superimposed on the chosen patch 37 and pressed onto the green innerliner 16. The green innerliner 16 is then positioned on the building drum (not shown) and construction of the tire assembly 10 is completed in the usual manner. The green tire assembly 10 is then removed from the building drum, sprayed with lining cement and cured. Upon cooling, and after removing loose lining cement, the thermoformable film 20 is readily removed. To facilitate easy removal, it is advisable to keep a small crease on the barrier layer 20, which forms a pull-tab after cure (not shown in FIG. 4). It will be evident that, where only a patch of virgin surface is required, the barrier layer 20 may be post-positioned, that is, pressed onto the chosen patch 37 of green innerliner 16 after the green tire 10 is constructed in a conventional manner.

Application of the barrier layer 20 as illustrated in FIGS. 2, 3 and 4 is usable in the case of a barrier layer made of a material that will stretch and survive the stress applied during the tire building process. In the case of a barrier layer made of a material that does not have sufficient stretch to survive the tire building process, rather than application of the barrier layer during the tire building process, the barrier layer 20 may instead be applied directly to the virgin green surface of the innerliner of a completed but uncured green tire after the tire building process. Such a green tire having the barrier layer applied after the tire building process would then be cured in a tire mold, with the inner liner surface protected as described previously herein.

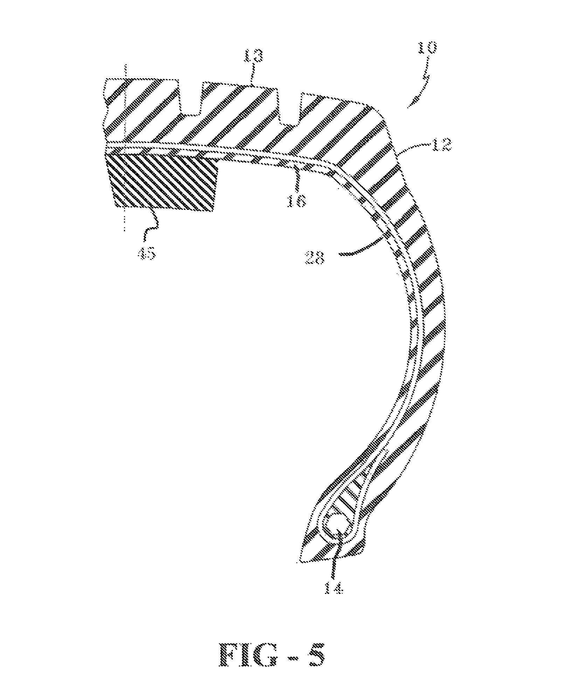

Following removal of the barrier layer 20, a foam noise damper 45 may be applied to the cured virgin surface 28 of innerliner 16, as depicted in FIG. 5, without the need for a solvent cleaning process. By way of example, a "fast dry cement," available from Patch Rubber Co., is applied to the cured virgin surface 28 of innerliner 16 at the desired location, and the foam noise damper 45 is tightly pressed onto the coated surface and allowed to cure. The foam noise damper 45 is secured tightly so that it will not fall off during operation of the tire. In addition to, or as an alternative to, coating the innerliner 16 with the adhesive, the bonding side of the foam noise damper 45 may be coated with the adhesive. Where both the innerliner 16 and the foam noise damper 45 are coated, the same adhesive or different adhesives may be used.

In one embodiment, the barrier layer is a thermoformable film that separates all or a part of the innerliner surface from the curing bladder surface during the shaping and curing steps to prevent contamination of the virgin surface of the innerliner in the mold. In order to expand with the innerliner during green tire building and curing, the thermoformable film should exhibit the property of necking, which refers to the ability of a material to stretch without returning back to its original shape. The film advantageously exhibits necking in at least one direction, and preferably in both directions, usually referred to as the machine direction (MD) and cross direction (CD). The necking force, in accordance with room temperature testing at a cross-head speed of 50.8 cm/min, is advantageously below 111.2 N (25 lbf), and more advantageously below 88.96 N (20 lbf), in at least one direction, and preferably in both directions, for a 2.54 cm wide strip. Non-oriented films are desirable, though partially oriented films may also be used. Non-oriented films may be characterized by essentially equal necking forces in both the machine and cross directions.

Further, the thermoformable film should exhibit a melting point greater than the curing temperature of the tire assembly, which is generally in the range of about 121ºC (250ºF) to about 200ºC (392ºF). The thermoformable film should further have sufficient strength to be removed from the innerliner in a single piece for ease of manufacture. In an exemplary embodiment, the thermoformable film may be overlapped to form a pull-tab to facilitate easy removal of the film, and the overlapped portion of the film must not fuse together. In one embodiment, the thermoformable film has a thickness less than about 5 mils (127 µm), for example less than about 3 mils (76.2 µm). In another embodiment, the thermoformable film has a thickness greater than about 0.6 mil (15 µm), for example, greater than 0.75 mil (19 µm). Nylon 6 and nylon 6,6 films on the order of 19 µm (0.75 mil) to 50.8 µm (2 mils) thick may serve as exemplary thermoformable films in the present invention. Exemplary films include: CAPRAN^{®} Nylon, which is a multipurpose nylon 6 film commercially available from Honeywell, International, Pottsville, Pennsylvania; fluorinated ethylenepropylene (FEP) films, such as TEFLON^{®} FEP fluorocarbon film from DuPont Films or A4000 from Airtech International, Inc.; 1-phenyl-3-methyl-5-pryrazolone (PMP) films, such as PMP Release Film from Honeywell; and C917 DARTEK^{®}, which is a nylon 6,6 film available from DuPont, Canada. Necking force, maximum tensile strength, % elongation and thickness for these exemplary films (2.54 cm wide) are provided below in Table 1. Exemplary thermoformable films are those that are non-oriented or only partially oriented and exhibit a necking force in both the machine direction and cross direction of less than 88.96 N (20 lbf).

**Table 1**

| **Sample** | **mil** | **µm** | **Max Tensile** **(MPa)** | **Necking** **(Ibf)** | **Elongation** **(%)** |
|---|---|---|---|---|---|
| TEFLON^{®} FEP (MD) | 1 | 25.4 | 22 | 2.25 | 393 |
| TEFLON^{®} FEP (CD) | 1 | 25.4 | 23.5 | 2.6 | 272 |
| PMP (MD) | 1 | 25.4 | 28 | 3.5 | 107 |
| PMP (CD) | 1 | 25.4 | 28 | 2.5 | 90 |
| C917 DARTEK^{®},(MD) | 2.0 | 50.8 | 173 | 11.5 | 202 |
| C917 DARTEK^{®!},(CD) | 2.0 | 50.8 | 118 | 11.25 | 128 |
| C917 DARTEK^{®},(MD) | 0.75 | 19 | 48.9 | 4.5 | 90 |
| C917 DARTEK^{®},(CD) | 0.75 | 19 | 47.7 | 4.25 | 59 |
| CAPRAN^{®} Nylon (MD) | 1 | 25.4 | 61 | 7 | 118 |
| CAPRAN^{®} Nylon (CD) | 1 | 25.4 | 63 | 6 | 60 |

| | | | | | |
|---|---|---|---|---|---|
| (1 lbf = 4.448 Newton) (1 mil = 25.4 µm) | | | | | |

By way of further example, nylon films are particularly useful in the method of the present invention. Examples of nylons which may be formed into film are linear polycondensates of lactams of 6 to 12 carbon atoms and conventional polycondensates of diamines and dicarboxylic acids, e.g. nylon 6,6; nylon 6,8; nylon 6,9; nylon 6,10; nylon 6,12; nylon 8,8; and nylon 12,12. Further examples to be mentioned are nylon 6, nylon 11 and nylon 12, which are manufactured from the corresponding lactams. In addition, it is possible to use polycondensates of aromatic dicarboxylic acids, e.g., isophthalic acid or terephthalic acid, with diamines, e.g., hexamethylenediamine, or octamethylenediamine, polycarbonates of aliphatic starting materials, e.g., m- and p-xylylenediamines, with adipic acid, suberic acid and sebacic acid, and polycondensates based on alicyclic starting materials, e.g., cyclohexanedicarboxylic acid, cyclohexanediacetic acid, 4,4'-diaminodicyclohexylmethane and 4,4'-diaminodicyclohexylpropane.

In one embodiment, the barrier layer is an adherent, removable, inner rubber strip adhered to the innerliner of the tire.

In this embodiment, the barrier layer as a removable, rubber strip comprises a rubber admixture of (A) 50 to 100, preferably 60 to 90, parts by weight butyl rubber and, correspondingly, (B) 50 to 0, preferably 40 to 10, parts by weight of an ethylene/propylene/nonconjugated diene terpolymer rubber.

It is understood that the rubber strip can also contain conventional rubber compounding ingredients including processing oil, accelerators, conventional sulfur curing agents, pigments, carbon black, zinc oxide, stearic acid, tackifying resin, and plasticizer.

In the practice of this invention, it is required that the said rubber strip is covulcanized with the tire in the sense that the uncured rubber strip is built onto the innerliner as a part of the green, or uncured, tire construction. Thus, in the molding and curing operation for producing the tire, the strip and green tire cure substantially simultaneously.

In one embodiment, the cocured rubber strip barrier layer has a relatively low adhesion to the inside surface of the tire of less than about 10 lbs. per linear inch (1.8 Kg/linear cm), so that it can conveniently be pulled out by hand or by machine, and a tack value in the range of 10 to 30 Newtons so that it will adequately adhere, or stick, to the inside surface of the green tire.

The adherent, removable, rubber strip typically has a thickness in the range of 0.01 to 0.1 inch (0.025-0.25 cm), preferably 0.02 to 0.08 inch (0.05-0.2 cm). After the tire containing the rubber strip on its innerliner has been shaped and cured, the co-cured rubber strip as the barrier layer can simply be removed by hand or by manual or automatic device. The rubber sheet can be color-coded with a pigment to contrast with the color of the tire itself so that it can be readily apparent whether it has actually been removed prior to further processing of the tire.

The butyl rubber for the rubber strip utilized in this invention is generally of the type prepared by polymerizing a mixture of isobutylene and isoprene, with the major portion being isobutylene. The butyl rubber typically has an average molecular weight in excess of 200,000, preferably in the range of 200,000 to 600,000 and even more preferably in the range of 200,000 to 400,000.

The vulcanized rubber tire itself can be of various sulfur curable rubbers such as natural rubber and synthetic rubber and their mixtures or blends. For example, it can be at least one of rubbery butadiene/styrene copolymer, butadiene/acrylonitrile copolymer, cis-1,4 polyisoprene (natural or synthetic), polybutadiene, isoprene/butadiene copolymer, butyl rubber, halogenated butyl rubber, such as chloro or bromobutyl rubber, ethylene/propylene copolymer or ethylene/propylene terpolymer (EPDM). Typically the various polymers are cured or vulcanized by normal sulfur curing methods and recipes.

In particular, although other portions of the tire can be of such rubbers, the inside surface of the tire, to which the rubber strip is covulcanized, is typically and preferably comprised of a butyl-type rubber, natural rubber, or mixture thereof. Such butyl-type rubber can conveniently be selected from at least one of butyl rubber or a halobutyl rubber such as chlorobutyl or bromobutyl rubber.

The vulcanized rubber tire itself can be of various sulfur curable rubbers such as natural rubber and synthetic rubber and their mixtures or blends. For example, it can be at least one of rubbery butadiene/styrene copolymer, butadiene/acrylonitrile copolymer, cis-1,4 polyisoprene (natural or synthetic), polybutadiene, isoprene/butadiene copolymer, butyl rubber, halogenated butyl rubber, such as chloro or bromobutyl rubber, ethylene/propylene copolymer or ethylene/propylene terpolymer (EPDM). Typically the various polymers are cured or vulcanized by normal sulfur curing methods and recipes.

In particular, although other portions of the tire can be of such rubbers, the inside surface of the tire, to which the rubber strip is covulcanized, is typically and preferably comprised of a butyl-type rubber, natural rubber, or mixture thereof. Such butyl-type rubber can conveniently be selected from at least one of butyl rubber or a halobutyl rubber such as chlorobutyl or bromobutyl rubber.

An exemplary recipe for the rubber strip used as a barrier layer is shown in Table 2. The rubber strip, for this example, may be prepared according to the following recipe in which the ingredients of Table 2a are mixed in a Banbury mixer and the resultant mixture mixed on a mill with the ingredients of Table 2b.

**Table 2a**

| Compound | Parts |
|---|---|
| Butyl rubber | 70.0 |
| EPDM¹ | 30 |
| Carbon Black (FEF) | 50 |
| Stearic Acid | 1.5 |
| Zinc Oxide | 2.0 |
| Tackifying Resin² | 8.0 |

| | |
|---|---|
| ¹Ethylene/propylene/diene rubber obtained as Nordel 1320, Nordel being a trademark of the DuPont de Nemours, E.I. Co. ²Hydrocarbon derived tackifying resin of the diolefin/olefin copolymer type having a softening point in the range of about 94ºC to about 98ºC. | |

**Table 2b**

| Compound | Parts |
|---|---|
| Mercaptobenzothiazole | 1.0 |
| Tetramethylthiuram disulfide | 1.25 |
| Sulfur | 2.0 |

In one embodiment, it may be desirable to include a tackifier in the recipe for the rubber composite strip as a building aid during the building of the green tire itself. In this regard, generally 2 to 10 parts by weight of resin tackifier for said EPDM and butyl rubbers is used. Suitable tackifiers include terpene resins and synthetic hydrocarbon-derived resins having a softening point in the range from 50º to 110ºC.

For example, such resins can be prepared by polymerizing hydrocarbon monomers in the presence of the catalyst such as aluminum chloride or boron trifluoride or boron trifluoride etherate. Such monomers, for example, can be a mixture of diolefin and monoolefin hydrocarbons containing from 4-6 carbon atoms. For example, piperylene can be copolymerized with methyl branched α-olefin containing 5-6 carbon atoms.

The optional PSA (pressure sensitive adhesive) is a rubber-based adhesive that is compatible with the rubber of the innerliner. As is known in the adhesive art, PSA's typically principally comprise a polymer system, one or more tackifiers, and one or more plasticizers. In the present invention, the polymer system for the PSA is rubber-based so as to be compatible with the rubber of the innerliner. Without being bound by theory, during curing of the tire assembly, the PSA is believed to lose its status as a PSA, due to migration of the tackifier and/or other materials and/or degradation of the PSA at high temperature. When the thermoformable film is removed, all or some of the PSA, or former PSA, may be removed with the film and/or some or all may remain on or as part of the innerliner. Again, without being bound by theory, if the PSA composition is based on a rubber that is compatible with the rubber of the innerliner, then during curing, the degrading PSA may, in whole or part, migrate into the innerliner surface, thereby becoming part of the cured virgin innerliner surface. Alternatively, it may leave a cohesively-bonded surface coating, but that coating is itself an innerliner-type rubber and is free of release agent, thus being essentially the same as the cured virgin innerliner surface. Thus, in an exemplary embodiment, the PSA is curable during tire vulcanization to cohesively bond with or become a part of the tire innerliner.

In an exemplary embodiment of the present invention, the PSA may be a natural rubber-based, butyl rubber-based, halobutyl rubber-based or polybutadiene rubber-based adhesive, or combination thereof, since these rubbers are commonly used tire materials. By "rubber-based" is meant that the rubber is the principle component of the PSA, i.e., the component present in the greatest quantity. In a further exemplary embodiment, the PSA is a permanent grade hot-melt PSA. An exemplary PSA is commercially available from H.B. Fuller Company, Vadnais Heights, MN, as a permanent grade, hot-melt PSA under Product Number HL2201X. Another PSA is Product Number G1110 from 3M (formerly Emtech). The PSA adheres the thermoformable film reliably to the innerliner surface, and yet allows the thermoformable film to be removed therefrom after curing the tire assembly.

The PSA may be coated onto the thermoformable film by any desirable method, such as solvent coating or hot melt extrusion coating. A film could also be purchased pre-coated. The PSA-coated film may be adhered by any pressure suitable for the particular type of adhesive. For example, hand pressure may be used to adhere to the PSA to the innerliner, or a roller, such as a 2.54 cm roller, may be rolled along the surface of the PSA-coated film to adhere the PSA.

The foam noise damper 45 is fixed to the inside of the innerliner radially inward of the tread, as shown in FIG - 5. Accordingly, to deform easily during running and not to affect the running performance such as steering stability, the material of the damper is preferably a light-weight low-density flexible material, e.g., foamed rubber. As foamed materials (or sponge materials), an open-cell type and a closed-cell type can be used, but an open-cell type is preferred. In the present invention a silicone rubber foam is used.

Depending on the environment where the tire is used, there is a possibility that the air which fills the tire cavity to inflate the tire is humid and the water makes condensation in the closed cavity. Accordingly, foam materials which are hard to be hydrolyzed such as ether based polyurethane are suitably used.

Further, in order to prevent water from penetrating into the noise damper, a water repellent treatment can be preferably made on the foam material. Also, a mildewproof treatment can be preferably made.

Furthermore, in order to avoid poison in the emission gas generated when incinerating scrap tires, it is preferred that raw materials not including halogen are used to make the foam material.

By disposing a certain volume of the foam material in the tire cavity, resonances of the air in the cavity can be controlled and vibrations of the tread portion are reduced. Therefore, noise generated from the tire during running can be reduced. In particular, reduction of noise due to tire cavity resonance measured at a frequency of 200 to 300 Hz is desirable.

The foam noise damper has a specific gravity and dimensions suitable to reduce noise level due to tire cavity resonance at 200 to 300 Hz. In one embodiment, the foam has a specific gravity greater in a range of 0.005 to 0.06 (5 to 60 kg/m³). In one embodiment, the foam noise damper has a thickness in the tire radial direction ranging from 10 to 50 mm. In one embodiment, the foam noise damper has a width in the axial tire direction ranging from 30 to 150 mm. In one embodiment, the foam noise damper is disposed circumferentially about the tire.

The foam noise damper 45 is fixed to the innerliner radially inward of the tread, using an adhesive applied directly or as double-sided adhesive tape.

As to the adhesive, in one embodiment an adhesive tape having a base tape with a coat or layer of an adhesive material on one side and a coat or layer of an adhesive material on the other side may be used. In one embodiment, an adhesive tape having no base tape and made up of only double layers of different adhesive materials may be used. In one embodiment, an adhesive made up of only a single layer of an adhesive material may be used.

In the case of adhesive tape, the base tape may be, for example: plastic film such as polyester; sheet of plastic foam such as acrylic foam; nonwoven fabric or bonded material; a woven textile; and the like.

As to the adhesive material, for example, a rubber-based adhesive comprising natural rubber and/or synthetic rubber and additives, e.g. tackifier, softener, age resistor and the like; an acrylic pressure sensitive adhesive comprising a plurality of copolymers of an acrylic ester and a polyfunctional monomer having different glass-transition temperatures (containing pressure sensitive adhesives of high heat resistant type, flame resistant type and low-temperature adhesion type); a silicone pressure sensitive adhesive comprising a silicone rubber and a resin; a polyether adhesive; a polyurethane adhesive and the like may be suitably used.

The use of a thermosetting adhesive comprising a thermosetting resin, e.g. epoxy resin or the like is not preferred in view of the production efficiency because the adhesive needs to be heated up to 130ºC for 30 minutes.

As to the adhesive materials, it is possible to use the same adhesive material, but, it is desirable to use different types of adhesive materials. For example, a rubber adhesive which adheres strongly to the tire rubber, and an acrylic pressure sensitive adhesive which adheres strongly to the noise damper are used on the respective sides of an adhesive tape or adjacently.

## Claims

1. A method for making a tire having a foam noise damper, the method comprising the steps of:
pressing a barrier layer (20) onto an exposed virgin surface (28) of a green tire innerliner (16) to adhere the barrier layer to the virgin surface (28) and thereby form a protected green innerliner;
curing the protected green innerliner;
removing the barrier layer (20) to reveal the virgin surface (28); and
securing a foam noise damper (45) to the virgin surface (28); wherein the foam noise damper (45) is made of silicone rubber foam.

2. The method of claim 1, further comprising the step of exposing the protected green innerliner to a mold release agent.

3. The method of claim 1 or 2 wherein the barrier layer (20) is a thermoformable film.

4. The method of claim 1, wherein the barrier layer (20) is a nylon film.

5. The method of claim 1, wherein the barrier layer (20) is a rubber strip.

6. The method of claim 5, wherein the barrier layer (20) is a rubber strip comprising butyl rubber and ethylene-propylene-diene (EPDM) rubber.

7. The method of claim 5, wherein the barrier layer (20) is a rubber strip, and the rubber strip is co-vulcanized with the green tire innerliner (16).

8. The method of at least one of the previous claims, wherein the foam noise damper (45) is secured to the virgin surface (28) using an adhesive.

9. The method of at least one of the previous claims, wherein the foam noise damper (45) is secured to the virgin surface (28) using double sided tape.

10. The method of at least one of the previous claims, wherein the barrier layer (20) is applied during a tire building process on a tire building drum (32).

11. A tire having a foam noise damper wherein the foam noise damper (45) is secured to a virgin surface (28) of a cured tire innerliner (16) using an adhesive or double sided tape and wherein the foam noise damper (45) is made of silicone rubber foam.

## Patentansprüche

1. Verfahren zur Herstellung eines Reifens mit einem Schaumstoff-Geräuschdämpfer, wobei das Verfahren die Schritte umfasst des:
Pressens einer Barriereschicht (20) auf eine freiliegende fabrikneue Oberfläche (28) eines Reifeninnenisolierungs-Rohlings (16), um die Barriereschicht an die fabrikneue Oberfläche (28) anzuheften und dadurch einen geschützten Innenisolierungs-Rohling zu bilden;
Vulkanisierens des geschützten Innenisolierungs-Rohlings;
Entfernens der Barriereschicht (20), um die fabrikneue Oberfläche (28) freizulegen; und
Sicherns eines Schaumstoff-Geräuschdämpfers (45) an der fabrikneuen Oberfläche (28); wobei der Schaumstoff-Geräuschdämpfer (45) aus Silikonkautschukschaumstoff hergestellt ist.

2. Verfahren nach Anspruch 1, weiter den Schritt des einem Formtrennmittel Aussetzens des geschützten Innenisolierungs-Rohlings umfassend.

3. Verfahren nach Anspruch 1 oder 2, wobei die Barriereschicht (20) eine thermoverformbare Folie ist.

4. Verfahren nach Anspruch 1, wobei die Barriereschicht (20) eine Nylonfolie ist.

5. Verfahren nach Anspruch 1, wobei die Barriereschicht (20) ein Kautschukstreifen ist.

6. Verfahren nach Anspruch 5, wobei die Barriereschicht (20) ein Kautschukstreifen ist, der Butylkautschuk und Ethylen-Propylen-Dien(EPDM)-Kautschuk umfasst.

7. Verfahren nach Anspruch 5, wobei die Barriereschicht (20) ein Kautschukstreifen ist und der Kautschukstreifen mit dem Reifeninnenisolierungs-Rohling (16) covulkanisiert ist.

8. Verfahren nach mindestens einem der vorgenannten Anspruche, wobei der Schaumstoff-Geräuschdämpfer (45) unter Verwendung eines Klebstoffs an der fabrikneuen Oberfläche (28) gesichert ist.

9. Verfahren nach mindestens einem der vorgenannten Ansprüche, wobei der Schaumstoff-Geräuschdämpfer (45) unter Verwendung doppelseitigen Klebebandes an der fabrikneuen Oberfläche (28) gesichert ist.

10. Verfahren nach mindestens einem der vorgenannten Ansprüche, wobei die Barriereschicht (20) während eines Reifenbauvorgangs auf einer Reifenbautrommel (32) angebracht wird.

11. Reifen mit einem Schaumstoff-Geräuschdämpfer, wobei der Schaumstoff-Geräuschdämpfer (45) unter Verwendung eines Klebstoffs oder doppelseitigen Klebebandes an einer fabrikneuen Oberfläche (28) einer vulkanisierten Reifeninnenisolierung (16) gesichert wird und wobei der Schaumstoff-Geräuschdämpfer (45) aus Silikonkautschukschaumstoff hergestellt ist.

## Revendications

1. Procédé pour confectionner un bandage pneumatique possédant un amortisseur des bruits en mousse, le procédé comprenant les étapes consistant à :
comprimer une couche (20) faisant office de barrière sur une surface vierge exposée (28) d'un calandrage intérieur (16) d'un bandage pneumatique non vulcanisé pour faire adhérer la couche faisant office de barrière à la surface vierge (28) et ainsi obtenir un calandrage intérieur protégé non vulcanisé ;
vulcaniser le calandrage intérieur protégé non vulcanisé ;
retirer la couche (20) faisant office de barrière pour mettre à nu la surface vierge (28) ; et
fixer un amortisseur des bruits en mousse (45) à la surface vierge (28) ;
dans lequel l'amortisseur des bruits en mousse (45) est constitué d'une mousse de caoutchouc silicone.

2. Procédé selon la revendication 1, comprenant en outre l'étape consistant à exposer le calandrage intérieur protégé non vulcanisé à un agent de démoulage.

3. Procédé selon la revendication 1 ou 2, dans lequel la couche (20) faisant office de barrière est un film thermoformable.

4. Procédé selon la revendication 1, dans lequel la couche (20) faisant office de barrière est un film en nylon.

5. Procédé selon la revendication 1, dans lequel la couche (20) faisant office de barrière est un ruban en caoutchouc.

6. Procédé selon la revendication 5, dans lequel la couche (20) faisant office de barrière est un ruban en caoutchouc comprenant du caoutchouc butyle et du caoutchouc d'éthylène-propylènediène (EPDM).

7. Procédé selon la revendication 5, dans lequel la couche (20) faisant office de barrière est un ruban en caoutchouc, le ruban en caoutchouc est covulcanisé avec le calandrage intérieur de bandage pneumatique non vulcanisé (16).

8. Procédé selon au moins une des revendications précédentes, dans lequel l'amortisseur des bruits en mousse (45) est fixé à la surface vierge (28) en utilisant un adhésif.

9. Procédé selon au moins une des revendications précédentes, dans lequel l'amortisseur des bruits en mousse (45) est fixé à la surface vierge (28) en utilisant un ruban adhésif double face.

10. Procédé selon au moins une des revendications précédentes, dans lequel la couche (20) faisant office de barrière est appliquée au cours d'un processus de confection de bandage pneumatique sur un tambour (32) de confection de bandage pneumatique.

11. Bandage pneumatique possédant un amortisseur des bruits en mousse, dans lequel l'amortisseur des bruits en mousse (45) est fixé à une surface vierge (28) d'un calandrage intérieur vulcanisé de bandage pneumatique (16) en utilisant un adhésif ou un ruban adhésif double face, et dans lequel l'amortisseur des bruits en mousse (45) est constitué d'une mousse de caoutchouc silicone.
